# EUROPÄISCHE PATENTSCHRIFT

(11) **EP 3 052 295 B1**
(45) Veröffentlichungstag und Bekanntmachung des Hinweises auf die Patenterteilung: **05.08.2020**
(21) Anmeldenummer: 14799952.8
(22) Anmeldetag: 29.09.2014
(51) Int. Cl.: B29C 48/27, B29C 48/693, B29C 48/692, B29C 48/694, B01D 29/64, B29C 48/50

(54) **FILTERVORRICHTUNG**
FILTER DEVICE
DISPOSITIF DE FILTRATION

(30) Priorität: 04.10.2013 AT 506432013
(43) Veröffentlichungstag der Anmeldung: 10.08.2016
(73) Patentinhaber: EREMA Engineering Recycling Maschinen und Anlagen Gesellschaft m.b.H., 4052 Ansfelden (AT)
(72) Erfinder: ARBEITHUBER, Josef, A-4052 Ansfelden (AT); FEICHTINGER, Klaus, A-4052 Ansfelden (AT); PAULI, Peter, A-4052 Ansfelden (AT)
(74) Vertreter: Wildhack & Jellinek
(86) Internationale Anmeldenummer: PCT/AT2014/050223
(87) Internationale Veröffentlichungsnummer: WO 2015/048831

(56) Entgegenhaltungen:
- EP-A2- 0 312 354
- AT-B- 413 497
- DE-A1- 2 235 835
- DE-A1- 3 809 372
- DE-U1-202011 105 998

## Beschreibung

Die Erfindung betrifft eine Filtervorrichtung gemäß dem Oberbegriff des Patentanspruches 1. Derartige Filtervorrichtungen sind aus den Druckschriften AT 413 497 B, DE 38 09 372 A1, EP 0 312 354 A2, und DE 20 2011 105998 U1 bekannt.

Kunststoffschmelzen, die aus gesammelten Sekundärrohstoffen stammen weisen einen erhöhten Fremdstoffanteil (Holz, Papier, Aluminium, Fremdkunststoffe, Gummi, Elastomere usw.) auf. Um eine entsprechende Qualität des Regranulats zu erzeugen, muss dieser Fremdanteil so gut wie möglich aus der Schmelze entfernt werden. Dazu werden unterschiedliche Methoden bzw. Filter verwendet, wie z.B. Kolbenfilter, Scheibenfilter, kontinuierliche Filter oder diskontinuierliche Filter. Unter anderem werden Filtersysteme verwendet, bei denen sich Schaberelemente über ein metallisches Filtersieb bewegen, das üblicherweise eine glatte Oberfläche hat und Sieblöcher aufweist, die einen Durchmesser haben, der sich in einem Bereich von einigen µm bis zu einigen mm bewegt. Aufgabe der Schaberelemente ist es, zurückgehaltene Verschmutzungen abzuheben und einer Austragsvorrichtung zuführen. Neben dieser Grundfunktionalität ist die Einsatzdauer der Filtersiebe und die Wiederverwendbarkeit der Filtersiebe von besonderer wirtschaftlicher Bedeutung. Solche Filtersysteme sollten über mehrere Tage, Wochen, wenn möglich Monate im Einsatz bleiben, wobei Durchsätze von 100 Tonnen bis tausenden Tonnen gefahren werden sollten. Dabei sollen diese Filtersysteme Verschmutzungen im Prozentbereich aus der Schmelze auszutragen.

Zu diesem Zwecke ist der Verschleiß der Gleitpartner Filtersieb und Schaberelement von Bedeutung. Weiters ist es wesentlich, dass das Schaberelement die Verschmutzung abhebt und nicht am Filtersieb vor sich her fördert oder gar in die Sieblöcher stopft. Zu diesem Zwecke ist die besondere Gestaltung der Schaberelemente von Bedeutung.

Weiters sind auch die Dicke des Schaberelements, sein Anstellwinkel, sein Spitzenwinkel, der Radius an der Schabkante und die Anlagefläche des Schaberelements am Filtersieb beachtlich. Diese Parameter wirken zusammen und sind für einen langen Betrieb der Filtervorrichtung von Bedeutung.

Aufgabe der Erfindung ist es, eine Filtervorrichtung zu erstellen, die langlebig und einfach aufgebaut ist und insbesondere Verschmutzungen effizient von der Oberfläche des Filtersiebes beseitigt und ableitet.

Diese Ziele werden bei einer Filtervorrichtung der eingangs genannten Art mit den im Kennzeichen des Anspruches 1 angeführten Merkmalen erreicht. Erfindungsgemäß ist somit vorgesehen, dass die Schabkante zumindest in ihrem in Bewegungsrichtung voreilenden Endbereich eine Rundung aufweist, deren Radius weniger als 90 %, vorzugsweise weniger als 50 %, insbesondere weniger als 20 %, des maximalen Durchmessers bzw. der maximalen Öffnungsweite der Sieblöcher beträgt.

Es zeigte sich, dass die spezielle Ausbildung der Rundung der Schabkante wesentlich zur Langlebigkeit und effizienten Beseitigung von Verschmutzungen beiträgt. Erfindungsgemäß wird sichergestellt, dass das Schaberelement die Verschmutzungen von den Sieblöchern, die beispielsweise einen Durchmesser von 100 bis 200 µm besitzen können, mit seiner Schabkante effizient abhebt, weil der Radius der Schabkante kleiner ist als die Dimension der Sieblöcher. Ist dieser Radius zu groß werden Verunreinigung vor dem Schaberelement hergeschoben und in die Sieböffnungen gestopft und es kommt zur Verstopfung der Sieblöcher, was einen Ausfall der Filtervorrichtung zur Folge hat oder zu einem Durchdrücken der Verschmutzungen führt, womit ein erhöhter Verschmutzungsgrad im Regranulat eintritt und zu einer minderwertigen Qualität des Endproduktes führt.

Dieser Radius bzw. der Endbereich des Abschnittes des Schabelementes, der eine derartige Rundung besitzt, soll während der Einsatzdauer weitgehend unverändert erhalten bleiben. Dies unter der Voraussetzung dass neben den Reibpartnern Filtersieb und Schaberelement auch noch abrasive Stoffe wie Metalle, Papier, Sand, Füllstoffe usw. als Reibpartner vorhanden sind und die Beseitigung der Verschmutzungen beeinflussen bzw. das Schaberelement abarbeiten. Ist der Radius der Schabkante zu groß, werden Verunreinigungen vor der Schabkante hergeschoben. Das ist insbesondere dann kritisch, wenn die Dimensionen der Verunreinigungen in der Größe der Sieblöcher liegen. In diesem Fall wird jede Verunreinigung mehrfach in die Sieblöcher gedrückt und wieder herausgezogen, was in weiter Folge zu erhöhtem Verschleiß an den Filtersieben und Schaberelementen führt und deren Einsatzdauer verkürzt. Ist der Schaber zu dick, hat er keinen entsprechenden Spitzwinkel oder steht er auch noch dazu zu steil zum Filtersieb, kann es rasch zu einer unerwünschten Verrundung der Schabkante kommen und sofern keine Nachschärfung erfolgt, wird die Filtervorrichtung versagen.

Erfindungsgemäß schließt sich eine Anlagefläche an der siebnahen Fläche des Endbereiches des Schaberelements an die Rundung an, deren Erstreckung senkrecht zum Längsverlauf der Schabkante dem 5- bis 100-fachen, vorzugsweise dem 10- bis 50-fachen, des maximalen Durchmessers bzw. der maximalen Öffnungsweite der Sieblöcher entspricht. Die Erstreckung der Anlagefläche bzw. deren Dimension parallel zur Bewegungsrichtung des Schaberelementes sollte nicht zu lang und auch nicht zu kurz sein, sodass die Rundung der Schabkante aufgrund der Materialabtragung durch die Polymerschmelze und deren Verunreinigungen während des Betriebes durch Nachschärfung erhalten bleibt.

Von Vorteil ist des weiteren, wenn das Schaberelement plattenförmig, insbesondere mit parallelen, vorzugsweise planebenen, Großflächen, d.h. einer Rückenfläche und einer Vorderfläche, ausgebildet und in einem Anstellwinkel von 5 bis 60°, vorzugsweise 10 bis 45°, insbesondere 20 bis 35°, zur Oberfläche des Rtersiebes geneigt angeordnet ist. Ist das Schaberelement zu steil gegenüber der Oberfläche des Filtersiebes angestellt, so wird der Radius der Rundung durch Materialabtragung vergrößert bzw. es verkleinert sich die Anlagefläche und das Schaberelement kann sich auf der Oberfläche des Filtersiebes verhaken, was zu einer Zerstörung des Filtersiebes führen kann.

Die Länge bzw. die Dimensionen der Anlagefläche in Bewegungsrichtung und/oder der Anstellwinkel sind somit von Bedeutung, um das Passieren von Verunreinigungen durch das Filtersieb möglichst zu minimieren. Sofern diese beiden Parameter nicht in der erforderlichen Weise abgestimmt sind, wird unerwünschter Druck auf die Sieblöcher ausgeübt und Verunreinigungen werden in die Sieblöcher gestopft.

Auch der Spitzenwinkel am siebnahen Ende des Schaberelementes ist von Bedeutung. Erfindungsgemäß ist vorgesehen, dass das Schaberelement in seinem siebnahen Endbereich einen in der Schabkante endenden sich verjüngenden und die Rundung tragenden Abschnitt besitzt, wobei der Spitzenwinkel zwischen der diesen Abschnitt begrenzenden, siebnahen Rückenfläche und siebfernen Vorderfläche 1 bis 60°, vorzugsweise 5 bis 30°, insbesondere 10 bis 25°, berägt.

Die Einstellung derartiger Parameter ist auch von Bedeutung, um ein Aufschwimmen bzw. Abheben des Schaberelementes bei bestimmten Arten von Verschmutzungen, wie z.B. Aluminiumfolien, zu verhindern. Auch Sandverschmutzungen führen zu einem Aufschwimmen und das Schaberelement kann dann seine Aufgabe nicht mehr erfüllen.

Zur effizienten Abfuhr von von der Oberfläche des Filters abgehobenen bzw. abgetragenen Verschmutzungen ist es von Vorteil, wenn die siebferne Vorderfläche des Schaberelements ausgehend von der Schabkante knickfrei zum siebfernen Ende des Schaberelements hin verläuft. Ein knickfreier Übergang des sich verjüngenden Abschnittes in die siebferne Wandfläche des Schaberelementes hat den Vorteil, dass abgehobene Verschmutzungen nicht über eine Kante laufen müssen, die sich als ein Störfaktor beim Ableiten und Austragen der Verschmutzungen, insbesondere durch Verwirbelungen, erweisen kann.

Ein konstruktiv einfacher Aufbau des Schaberelementes sieht vor, dass die Dicke des plattenförmigen Schaberelements 0,5 bis 30 mm, vorzugsweise 1 bis 15 mm, insbesondere 2 bis 8 mm, beträgt, und/oder dass die Länge des Schaberelementes das 5- bis 50-fache, vorzugsweise das 8- bis 30-fache, der Dicke des Schaberelementes beträgt. Das Schaberelement ist vorteilhafterweise plattenförmig mit langgestrecktem, vorzugsweise rechteckförmigem, Querschnitt ausgebildet, an dessen einer kurzen Seite ein sich verjüngender Abschnitt anschließt bzw. ausgebildet ist, der letztlich einen Spitzenwinkel ausbildet, der in die Schabkante mit ihrer Rundung ausläuft.

Mit der erfindungsgemäßen Filtervorrichtung wird verhindert, dass Verunreinigungen immer wieder längs der Oberfläche des Filtersiebes entlang geführt werden und es zu einem Verreiben des Schmutzes kommt, bis dieser klein genug ist, um durch die Sieblöcher zu passieren. Aufgrund der vorgesehenen Rundung an der Schabkante werden die Verunreinigungen effizient das Schaberelement hinaufbefördert und an einer vorgesehenen Stelle ausgetragen.

Der vorgesehene Spitzenwinkel bewirkt, dass bei einer Abarbeitung der Schabkante durch abrasive Stoffe der Endbereich des verjüngten Abschnittes nur langsam in seiner Dicke mit zunehmender Entfernung von der Oberfläche des Filtersiebes zunimmt und trotz mechanischem Abtrag, ausgelöst durch abrasive Stoffe, der Radius der Rundung der Schabkante weitgehend erhalten bleibt und die sich in Bewegungsrichtung erstreckende Ausdehnung und die Länge des Kreisbogens der Rundung nur langsam abnimmt. Aus diesem Grund ist es auch vorteilhaft, wenn die Dicke des plattenförmigen Schabelementes gering gehalten wird und lediglich durch die erforderliche mechanische Festigkeit bestimmt wird, da der sich verjüngende Abschnitt dann einfacher auszubilden ist.

Die Dicke des Schaberelementes ist auch von Bedeutung für die Anpassung des Schaberelementes an die Oberfläche des Filtersiebes. Dicke Schaberelemente können nicht ohne weiteres an wellige Filtersiebe angepasst werden; relativ dünn gehaltene Schaberelemente können auch gewellten Sieben folgen. Des Weiteren können sich dünne Schaberelemente auch in die Richtung ihrer Querachse und um die Schabkante herum verwinden.

In der Praxis ist es ohne weiteres möglich, dass die Anlagefläche eine Breite von 1 bis 5 mm, in der Regel von 2 bis 3 mm, annimmt. Wesentlich ist jedoch die Ausbildung der Rundung an der Schabkante, und die Anlagefläche kann entweder bereits bei Herstellung des Schaberelementes in einem gewissen Ausmaß ausgebildet werden oder sich auch durch entsprechende Abarbeitung im Betrieb einstellen.

Im Folgenden wird die Erfindung anhand der Zeichnung näher erläutert.
Fig. 1 zeigt schematisch einen Schnitt durch eine erfindungsgemäße Filtervorrichtung.
Fig. 2 und 3 zeigen Detailansichten des filtersiebnahen Endes eines Schaberelementes.
Fig. 4 zeigt eine perspektivische Ansicht eines Schaberelementes. Fig. 5 zeigt auf einem Träger montierte Schaberelemente, so wie diese in einer Vorrichtung zur Rezyklierung von Polymeren eingesetzt werden können.

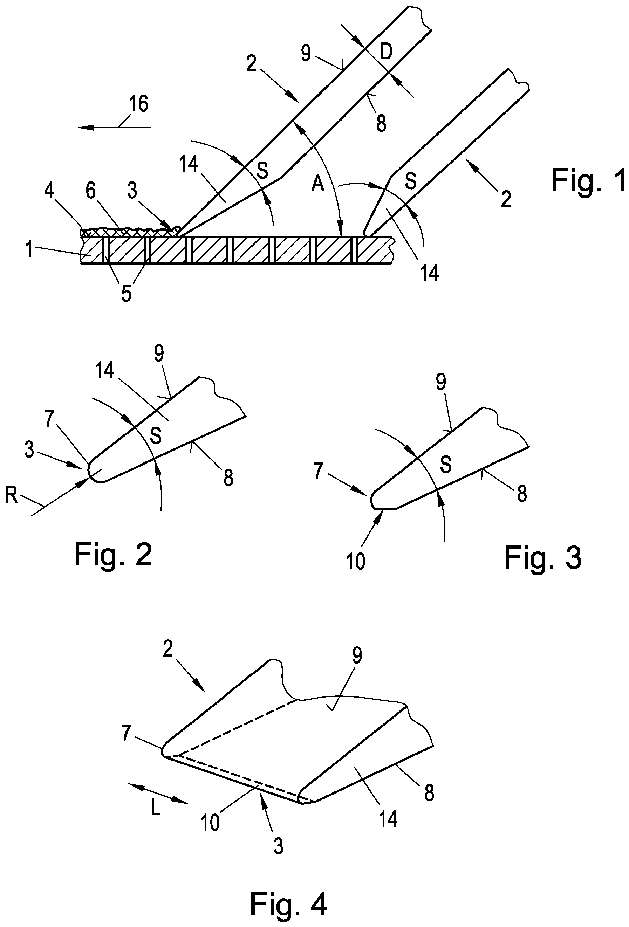

Fig. 1 zeigt eine einfache Ausführungsform einer erfindungsgemäßen Filtervorrichtung in einem schematischen Schnitt. Ein Schaberelement 2 liegt mittels einer Schabkante 3 an der Oberfläche 4 eines Filtersiebes 1 an, gleitet im Betrieb in Richtung des Pfeils 16 längs dieser Oberfläche 4 und hebt dabei auf der Oberfläche 4 aufliegende bzw. die Sieblöcher 5 des Filtersiebes 1 verschließende Verunreinigungen 6 mit einer Schabkante 3 ab. Diese Verunreinigungen werden dabei längs des Pfeils 17 bewegt und einer nicht dargestellten Austragseinrichtung zugeführt.

Das Filtersieb 1 ist zumeist aus Metall erstellt. Das Schaberelement 2 ist mit einem nicht dargestellten Träger in Position gehalten.

Das Schaberelement 2 ist plattenförmig, insbesondere in Form einer Platte mit rechteckförmigem Querschnitt, ausgebildet und besitzt eine siebnahe Rückenfläche 8 und eine siebferne Vorderfläche 9. Diese beiden Flächen 8, 9 bilden einen im siebnahen Endbereich des Schaberelements 2 liegenden Abschnitt 14 aus, der sich in Richtung auf das Filtersieb 1 verjüngt und einen Spitzenwinkel S ausbildet. In seinem siebnahen Endbereich besitzt der sich verjüngende Abschnitt 14 einen in eine Schabkante 3 auslaugenden Spitzwinkel S von 1 bis 60°, vorzugsweise 5 bis 30°, insbesondere 10 bis 25°. An dem siebnahen Endbereich ist eine Rundung 7 ausgebildet.

Es ist möglich, dass die Rückenfläche 8, wie bei einem rechts in Fig. 1 dargestellten Schaberelement 2 ersichtlich, knickfrei verläuft. Für das Abführen der Verunreinigungen 6 ist es jedoch vorzuziehen, dass die siebferne Vorderfläche 9 des Schaberelements 2 ausgehend von der Rundung 7 knickfrei zum siebfernen Ende des Schaberelements 2 hin verläuft.

In Fig. 2 ist eine Detailansicht der Schabkante 3 dargestellt. Die Schabkante 3 weist in ihrem in Bewegungsrichtung 16 voreilenden Endbereich eine Rundung 7 auf, deren Radius R weniger als 90 %, vorzugsweise weniger als 50 %, insbesondere weniger als 20 %, des maximalen Durchmessers bzw. der maximalen Öffnungsweite der Sieblöcher 5 beträgt. Die Rundung 7 kann sich über die gesamte Spitze, d.h. von der Vorderfläche 9 bis zur Rückenfläche 8, erstrecken und ermöglicht ein effizientes Abheben der Verunreinigungen 6 von der Oberfläche 4 des Filtersiebes 1 und sogar ein Herausziehen von Verunreinigungen aus den Sieblöchern 5.

Es ist auch möglich - so wie in Fig. 3 dargestellt - das siebnahe Ende des Abschnittes 14 derart auszubilden, dass an der siebnahen Fläche 8 des Endbereiches des Abschnittes 14 an die Rundung 7 eine Anlagefläche 10 anschließt, deren Erstreckung senkrecht zum Längsverlauf L der Schabkante 3 dem 5- bis 100-fachen, vorzugsweise dem 10- bis 50-fachen des maximalen Durchmessers bzw. der maximalen Öffnungsweite der Sieblöcher 5 entspricht. Diese Anlagefläche 10, die sich an die Rundung 7 anschließt, erstreckt sich parallel zur Oberfläche 4 des Filtersiebes 1 und verbessert das Abheben der Verunreinigungen 6 bzw. verhindert aufgrund ihrer Flächen eine allzu große Veränderung des Spitzenwinkels S bzw. ein Abtragen der Rundung 7 im Betrieb, sodass die Lebensdauer des Schaberelementes 2 erhöht wird. Diese Anlagefläche 10 kann im Betrieb ausgebildet werden oder bereits vor Inbetriebnahme des Schaberelementes 2 ausgebildet werden.

Wie aus Fig. 1 ersichtlich ist, ist das Schaberelement 2 unter einem Anstellwinkel A zur Oberfläche 4 des Filtersiebes 1 geneigt angeordnet. Das Schaberelement 2 ist plattenförmig, insbesondere mit parallelen, vorzugsweise planebenen, Großflächen, d.h. einer Rückenfläche 8 und einer Vorderfläche 9, ausgebildet und in einem Anstellwinkel A von 5 bis 60°, vorzugsweise 10 bis 45°, insbesondee 20 bis 35°, zur Oberfläche 4 des Filtersiebes 1 geneigt angeordnet. Als Anstellwinkel A wird der Winkel zwischen der knickfrei verlaufenden Großfläche des Schaberelementes 2 und der Oberfläche 4 des Filtersiebes 1 angesehen. Sofern der Abschnitt 14 des Schaberelementes 2 derart ausgebildet ist, dass beide Großflächen 8, 9 mit einem Knick in den Abschnitt 14 übergehen, so wird der Anstellwinkel A zwischen der Vorderfläche 9 des Schaberelementes 2 und der Oberfläche 4 des Filtersiebes 1 gemessen.

Fig. 4 zeigt eine perspektivische Ansicht eines erfindungsgemäßen Schaberelementes 2. Man erkennt die Vorderfläche 9, die in den Abschnitt 14 und in die Rundung 7 der Schabkante 3 übergeht. An die Rundung 7 anschließend liegt die Anlagefläche 10, die in die Rückenfläche 8 übergeht.

Die Dicke D des plattenförmigen Schaberelements 2 beträgt 0,5 bis 30 mm, vorzugsweise 1 bis 15 mm, insbesondere 2 bis 8 mm. Die Länge des Schaberelementes 2 beträgt das 5- bis 50-fache, vorzugsweise das 8- bis 30-fache, der Dicke D des Schaberelementes 2. Bei derartigen Schaberelementen 2 ist es in der Praxis in einfacher Weise möglich, eine entsprechende Verjüngung bzw. einen Abschnitt 14 auszubilden, der den gewünschten Spitzenwinkel S und ausreichende mechanische Festigkeit besitzt.

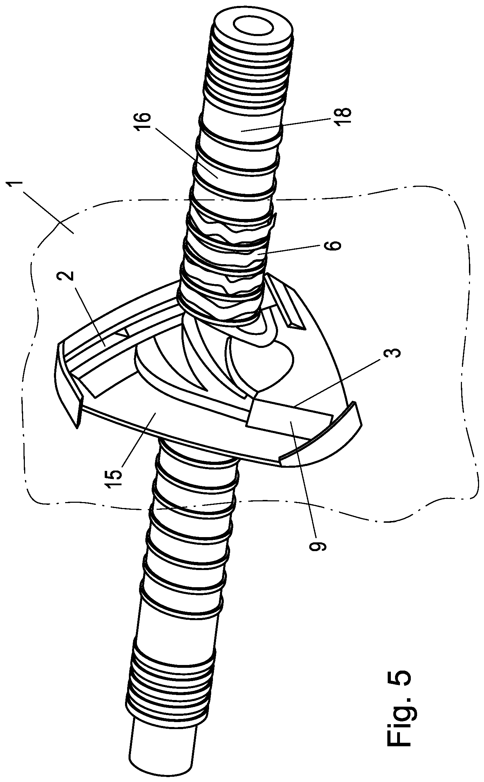

Fig. 5 zeigt ein Ausführungsbeispiels einer erfindungsgemäßen Filtervorrichtung, wobei die Lage des Filtersiebes 1 nur angedeutet ist. Das Filtersieb 1 wäre in diesem Fall feststehend und die Schaberelemente 2 mit ihren Schabkanten 3 sind auf einem Träger 15 relativ zum feststehenden Filter 7 rotierbar, welcher Träger 15 auf einer rotierbaren Welle 18 befestigt ist. Im Betrieb wird die Polymerschmelze über im Träger 15 ausgebildete Kanäle zur anströmseitigen Oberfläche 4 des Filtersiebes 1 geleitet und durch dieses durchgedrückt und abgeführt, wobei durch die rotierende Bewegung der Schaberelemente 2 die Verunreinigungen 6 vom Filtersieb 1 abgehoben und separat ausgetragen werden. Diese Verunreinigungen 6 werden, wie bereits im Zusammenhang mit Fig. 1 erläutert, längs der Vorderfläche 9 des Schaberelementes 2 abgeführt und in Richtung auf in der Welle 18 ausgebildeten Nuten 16 geleitet und über diese Nuten 16 werden die Verunreinigungen 6 mit einem gewissen Anteil der Polymerschmelze ausgetragen.

Die erfindungsgemäße Filtervorrichtung liegt in zwei funktionalen Ausführungsformen vor. Vor Inbetriebnahme kann der die Rundung 7 tragende Abschnitt 14 mit oder ohne Anlagefläche 10 ausgebildet sein. Ist der Abschnitt 14 ohne Auflagefläche 10 ausgebildet, so kann diese Anlagefläche 10 durch Inbetriebnahme ausgebildet werden. Sowohl bei einem derartigen Einlaufvorgang als auch bei Vergrößerung der Anlagefläche im fortgesetzten Betrieb wird ein effizientes Austagen von Verunreinigungen unterstützt.

Von Vorteil ist eine Ausführungsform, bei der vorgesehen ist, dass sich die Rundung 7 von der siebfilterfernen Vorderfläche 9 zumindest bis zu dem siebfilternächsten Punkt des Abschnittes 14 erstreckt, an dem gegebenenfalls die Anlagefläche 10 anschließt oder dass die die Rundung 7 von der Vorderfläche 9 zur Rückseite 8 um den Anlagepunkt des Schaberelements 2 an der Oberfläche 4 bzw. um den in Bewegungsrichtung 16 des Schaberelements 3 am weitesten vorne liegenden Punkt herum geführt ist. Diese in Fig. 2 dargestellte, sich um den Spitzenbereich des Schaberelements 3 herum erstreckende Rundung 7 verbessert das Abheben von Verunreinigungen bzw. erhöht die Standzeit. Bei Abarbeitung der der Oberfläche 4 zugewandten Rundung 7 kann sich die Anlagefläche 10 -wie in Fig. 3 dargestellt - in definierter Lage ausbilden.

## Patentansprüche

1. Filtervorrichtung für Polymerschmelzen mit einem Filtersieb (1), durch das die zu reinigende Polymerschmelze geführt ist, wobei die Filtervorrichtung zumindest ein Schaberelement (2) aufweist, das mit einer Schabkante (3) über die zustromseitige Oberfläche (4) des Filtersiebes (1) gleitet bzw. mit seinem der Schabkante (3) nahen Endbereich an der zustromseitigen Oberfläche (4) anliegt und die an der zustromseitigen Oberfläche (4) anhaftenden sowie die vor den Sieblöchern (5) liegenden Verunreinigungen (6) im Zuge seiner Bewegung über die zustromseitige Oberfläche (4) abhebt und/oder abstreift, wobei die Schabkante (3) zumindest in ihrem in Bewegungsrichtung (16) voreilenden Endbereich eine Rundung (7) aufweist, **dadurch gekennzeichnet, dass** der Radius (R) der Rundung (7) weniger als 90 % des maximalen Durchmessers bzw. der maximalen Öffnungsweite der Sieblöcher (5) beträgt, wobei an der siebnahen Fläche (8) des Endbereiches des Schaberelements (2) an die Rundung (7) eine Anlagefläche (10) anschließt, deren Erstreckung senkrecht zum Längsverlauf (L) der Schabkante (3) dem 5- bis 100-fachen des maximalen Durchmessers bzw. der maximalen Öffnungsweite der Sieblöcher (5) entspricht, und das Schaberelement (2) in seinem siebnahen Endbereich einen in der Schabkante (3) endenden, sich verjüngenden und die Rundung (7) tragenden Abschnitt (14) besitzt, wobei der Spitzenwinkel (S) zwischen der diesen Abschnitt (14) begrenzenden, siebnahen Rückenfläche (8) und siebfernen Vorderfläche (9) 1 bis 60° beträgt.

2. Filtervorrichtung nach Anspruch 1, **dadurch gekennzeichnet, dass** an der siebnahen Fläche (8) des Endbereiches des Schaberelements (2) an die Rundung (7) eine Anlagefläche (10) anschließt, deren Erstreckung senkrecht zum Längsverlauf (L) der Schabkante (3) dem 10- bis 50-fachen, des maximalen Durchmessers bzw. der maximalen Öffnungsweite der Sieblöcher (5) entspricht.

3. Filtervorrichtung nach Anspruch 1 oder 2, **dadurch gekennzeichnet,**
- **dass** das Schaberelement (2) plattenförmig, insbesondere mit parallelen, vorzugsweise planebenen, Großflächen, d.h. einer Rückenfläche (8) und einer Vorderfläche (9), ausgebildet und in einem Anstellwinkel (A) von 5 bis 60°, vorzugsweise 10 bis 45°, insbesondere 20 bis 35°, zur Oberfläche (4) des Fitersiebes (1) geneigt angeordnet ist, und
- **dass** die siebferne Vorderfläche (9) des Schaberelements (2) senkrecht zur Schabkante (3) ausgehend von der Rundung der Schabkante (3) knickfrei zum siebfernen Ende des Schaberelements (2) hin verläuft.

4. Filtervorrichtung nach einem der Ansprüche 1 bis 3, **dadurch gekennzeichnet, dass** das Schaberelement (2) in seinem siebnahen Endbereich einen in der Schabkante (3) endenden, sich verjüngenden und die Rundung (7) tragenden Abschnitt (14) besitzt, wobei der Spitzenwinkel (S) zwischen der diesen Abschnitt (14) begrenzenden, siebnahen Rückenfläche (8) und siebfernen Vorderfläche (9) 5 bis 30°, insbesondere 10 bis 25°, beträgt.

5. Filtervorrichtung nach einem der Ansprüche 1 bis 4, **dadurch gekennzeichnet, dass** sich die Rundung (7) von der siebfilterfernen Vorderfläche (9) zumindest bis zu dem siebfilternächsten Punkt des Abschnittes (14) erstreckt, an dem gegebenenfalls die Anlagefläche (10) anschließt oder dass die die Rundung (7) von der Vorderfläche (9) zur Rückseite (8) um den Anlagepunkt des Schaberelements (2) an der Oberfläche (4) bzw. um den in Bewegungsrichtung (16) des Schaberelements (3) am weitesten vorne liegenden Punkt herum geführt ist.

6. Filtervorrichtung nach einem der Ansprüche 1 bis 5, **dadurch gekennzeichnet, dass** das Schaberelement (2) nach Inbetriebnahme bzw. in einem durch Verwendung abgearbeiteten Zustand eine Anlagefläche (10) gemäß Anspruch 2 aufweist.

7. Filtervorrichtung nach einem der Ansprüche 1 bis 6, **dadurch gekennzeichnet, dass** der Radius (R) der Rundung (7) weniger als 50%, insbesondere weniger als 20%, des maximalen Durchmessers bzw. der maximalen Öffnungsweite der Sieblöcher (5) beträgt.

## Claims

1. Filter device for polymer melts, having a filter screen (1), through which the polymer melt to be cleaned is conducted, wherein the filter device has at least one scraper element (2), which slides by way of a scraping edge (3) over the inflow-side surface (4) of the filter screen (1) and/or rests with its end region close to the scraping edge (3) on the inflow-side surface (4) and which, when moving over the inflow-side surface (4), lifts and/or scrapes off the contaminants adhering to the inflow-side surface (4) as well as the contaminants (6) situated in front of the screen holes (5), wherein the scraping edge (3) has a curve (7) at least in its leading end region in the direction of movement (16), **characterised in that** the radius (R) of the curve (7) is less than 90 % of the maximum diameter and/or the maximum opening width of the screen holes (5), wherein, at the surface (8) facing the screen of the end region of the scraper element (2), the curve (7) adjoins a contact surface (10), the extension of which perpendicular to the longitudinal extent (L) of the scraping edge (3) corresponds to 5 to 100 times the maximum diameter and/or the maximum opening width of the screen holes (5), and the scraper element (2), in its end region close to the screen, has a tapering section (14) supporting the curve (7) ending in the scraping edge (3), wherein the apex angle (S) between the rear surface (8) facing the screen and the front surface (9) facing away from the screen bounding this section (14) is 1 to 60°.

2. Filter device according to claim 1, **characterised in that** at the surface (8) facing the screen of the end region of the scraper element (2), the curve (7) adjoins a contact surface (10), the extension of which perpendicular to the longitudinal extent (L) of the scraping edge (3) corresponds to 10 to 50 times the maximum diameter and/or the maximum opening width of the screen holes (5).

3. Filter device according to claim 1 or 2, **characterised in that** the scraper element (2) is designed to be plate-shaped, in particular with parallel, preferably level, large surfaces, i.e. a rear surface (8) and a front surface (9), and is arranged inclined at a setting angle (A) of 5 to 60°, preferably 10 to 45°, in particular 20 to 35°, to the surface (4) of the filter screen (1), and that the front surface (9) facing away from the screen of the scraper element (2) runs perpendicular to the scraping edge (3) starting from the curve of the scraping edge (3) without bends to the end of the scraper element (2) facing away from the screen.

4. Filter device according to any of claims 1 to 3, **characterised in that**, in its end region close to the screen, the scraper element (2) has a tapering section (14) supporting the curve (7) ending in the scraping edge (3), wherein the apex angle (S) between the rear surface (8) facing the screen and the front surface (9) facing away from the screen bounding this section (14) is 5 to 30°, in particular 10 to 25°.

5. Filter device according to any of claims 1 to 4, **characterised in that** the curve (7) extends from the front surface (9) facing away from the screen at least to the closest point to the screen of the section (14), at which, where appropriate, it adjoins the contact surface (10) or that the curve (7) is guided from the front surface (9) to the rear surface (8) around the contact point of the scraper element (2) on the surface (4) and/ or around the foremost point in the direction of movement (16) of the scraper element (3).

6. Filter device according to any of claims 1 to 5, **characterised in that**, after commissioning and/or in a condition created by use, the scraper element (2) has a contact surface (10) according to claim 2.

7. Filter device according to any of claims 1 to 6, **characterised in that** the radius (R) of the curve (7) is less than 50%, in particular less than 20%, of the maximum diameter and/or the maximum opening width of the screen holes (5).

## Revendications

1. Dispositif de filtre pour des polymères en fusion avec un tamis de filtre (1), à travers lequel est guidé le polymère en fusion à nettoyer,
dans lequel le dispositif de filtre présente au moins un élément racleur (2) qui glisse avec une arête racleuse (3) au-dessus de la surface côté afflux (4) du tamis de filtre (1) ou appuie avec sa zone terminale proche de l'arête racleuse (3) contre la surface côté afflux (4) et qui, au cours de son déplacement au-dessus de la surface côté afflux (4), soulève et/ou enlève par raclage les impuretés (6) adhérant à la surface côté afflux (4) ainsi que des impuretés situées devant les trous de tamis (5),
dans lequel l'arête racleuse (3) présente un arrondi (7) au moins dans sa zone terminale située devant dans la direction de déplacement (16),
**caractérisé en ce que** le rayon (R) de l'arrondi (7) est égal à moins de 90 % du diamètre maximal respectivement de la largeur d'ouverture maximale des trous de tamis (5),
dans lequel, au niveau de la surface (8), proche du tamis, de la zone terminale de l'élément racleur (2), l'arrondi (7) est suivi d'une surface d'appui (10) dont l'extension perpendiculairement à l'allure longitudinale (L) de l'arête racleuse (3) correspond à 5 à 100 fois le diamètre maximal respectivement la largeur d'ouverture maximale des trous de tamis (5) et l'élément racleur (2) a dans sa zone terminale proche du tamis un tronçon (14) qui se termine dans l'arête racleuse (3), se rétrécit et porte l'arrondi (7),
dans lequel l'angle au sommet (S) entre la surface arrière (8) délimitant ce tronçon (14) et proche du tamis et la surface avant (9) éloignée du tamis est compris entre 1 et 60°.

2. Dispositif de filtre selon la revendication 1, **caractérisé en ce que**, au niveau de la surface (8), proche du tamis, de la zone terminale de l'élément racleur (2), l'arrondi (7) est suivi d'une surface d'appui (10) dont l'extension perpendiculairement à l'allure longitudinale (L) de l'arête racleuse (3) correspond à 10 à 50 fois le diamètre maximal respectivement la largeur d'ouverture maximale des trous de tamis (5).

3. Dispositif de filtre selon la revendication 1 ou 2, **caractérisé en ce que**
- l'élément racleur (2) est réalisé en forme de plaque, en particulier avec de grandes surfaces parallèles, de préférence planes, c'est-à-dire une surface arrière (8) et une surface avant (9), et est agencé incliné d'un angle d'attaque (A) de 5 à 60°, de préférence de 10 à 45°, en particulier de 20 à 35°, par rapport à la surface (4) du tamis de filtre (1), et
- la surface avant (9), éloignée du tamis, de l'élément racleur (2) s'étend perpendiculairement à l'arête racleuse (3) à partir de l'arrondi de l'arête racleuse (3), sans coude, jusqu'à l'extrémité, éloignée du tamis, de l'élément racleur (2).

4. Dispositif de filtre selon l'une quelconque des revendications 1 à 3, **caractérisé en ce que** l'élément racleur (2) a, dans sa zone terminale proche du tamis, un tronçon (14) qui se termine dans l'arête racleuse (3), se rétrécit et porte l'arrondi (7),
dans lequel l'angle au sommet (S) entre la surface arrière (8) délimitant ce tronçon (14) et proche du tamis et la surface avant (9) éloignée du tamis est compris entre 5 et 30°, en particulier entre 10 et 25°.

5. Dispositif de filtre selon l'une quelconque des revendications 1 à 4, **caractérisé en ce que** l'arrondi (7) s'étend à partir de la surface avant (9) éloignée du tamis de filtre au moins jusqu'au point du tronçon (14) le plus proche du filtre de tamis, auquel la surface d'appui (10) fait suite le cas échéant ou **en ce que** l'arrondi (7) est guidé de la surface avant (9) à la surface arrière (8) autour du point d'appui de l'élément racleur (2) contre la surface (4) respectivement autour du point le plus en avant dans la direction de déplacement (16) de l'élément racleur (3).

6. Dispositif de filtre selon l'une quelconque des revendications 1 à 5, **caractérisé en ce que**, après sa mise en marche respectivement dans un état usé par l'utilisation, l'élément racleur (2) présente une surface d'appui (10) selon la revendication 2.

7. Dispositif de filtre selon l'une quelconque des revendications 1 à 6, **caractérisé en ce que** le rayon (R) de l'arrondi (7) est égal à moins de 50 %, en particulier moins de 20 %, du diamètre maximal respectivement de la largeur d'ouverture maximale des trous de tamis (5).
